# EUROPÄISCHE PATENTSCHRIFT

(11) **EP 1 661 781 B1**
(45) Veröffentlichungstag und Bekanntmachung des Hinweises auf die Patenterteilung: **04.06.2008**
(21) Anmeldenummer: 05024499.5
(22) Anmeldetag: 10.11.2005
(51) Int. Cl.: B60W 10/04, F16D 43/16

(54) **Verfahren zum Erkennen der Drehrichtung der Sekundärseite einer Anfahrkupplung**
Method of detecting the direction of rotation of the secondary side of a starting clutch.
Procédé de détection du sens de rotation au côté secundaire d'un embrayage de démarrage.

(30) Priorität: 26.11.2004 DE 102004057122
(43) Veröffentlichungstag der Anmeldung: 31.05.2006
(73) Patentinhaber: ZF FRIEDRICHSHAFEN Aktiengesellschaft, 88038 Friedrichshafen (DE)
(72) Erfinder: Doebele, Bernd, 88682 Salem (DE); Wiencek, Norbert, 88709 Hagnau (DE)

(56) Entgegenhaltungen:
- EP-A- 1 186 792
- EP-A- 1 297 991
- EP-A2- 1 288 059
- WO-A-03/059679
- DE-A1- 4 229 024
- DE-A1- 19 937 052
- DE-A1- 19 946 856

## Beschreibung

Die Erfindung betrifft ein Verfahren zum Erkennen der Drehrichtung der Sekundärseite einer Anfahrkupplung gemäß dem Oberbegriff des Patentanspruchs 1.

Es ist bekannt, herkömmliche Anfahrkupplungen mittels eines hydraulischen, pneumatischen oder elektromotorischen Stellantriebs und einer den Stellantrieb steuernden Steuerschaltung so zu automatisieren, dass auf das ansonsten erforderliche, vom Fahrer zu betätigende Kupplungspedal verzichtet werden kann. Der Steuerschaltung sind hierzu Drehzahlsensoren zugeordnet, die beispielsweise die Drehzahl der Brennkraftmaschine und/oder die Eingangsdrehzahl eines der Anfahrkupplung im Antriebsstrang nachgeordneten Schaltgetriebes erfassen. Abhängig von der Motordrehzahl und der Getriebeeingangsdrehzahl oder auch abhängig von sonstigen mit Hilfe geeigneter Sensoren erfasster Betriebsparameter steuert die Steuerschaltung den Stellantrieb so, dass die Anfahrkupplung möglichst ruckfrei einkuppelt. Um beim Anhalten das Abwürgen der Brennkraftmaschine zu verhindern, wird die Anfahrkupplung in ihre vollständig ausgekuppelte Stellung gesteuert, sobald die Motordrehzahl unter eine vorbestimmte Drehzahlschwelle kleiner als die Leerlaufdrehzahl der Brennkraftmaschine absinkt.

In der Regel setzt sich ein Fahrzeug dadurch in Bewegung, dass das sekundärseitige Kupplungsmoment dosiert auf das Niveau des Antriebsmoments gesteigert wird. Wirkt der Fahrwiderstand derart, dass sich das Fahrzeug ohne Einleiten eines Antriebsmoments in Bewegung setzt, besteht im Interesse der Verhinderung einer unkontrollierten Geschwindigkeitszunahme des Fahrzeugs, und damit auch der Entwicklung einer unzulässig hohen Drehzahl der Kupplungsscheibe, die Notwendigkeit das Fahrzeug durch Schließen der Kupplung abzufangen.

Die vorgenannte Situation des Anrollens bzw. Anfahrens des Fahrzeuges kann sowohl in einem Gang erfolgen, welcher der Anrollrichtung zugehörig oder aber dieser entgegengesetzt ist. Ist nämlich die Anrollrichtung der gangbezogenen Fahrtrichtung entgegengesetzt, führt das Einkuppeln zum Abfangen des Fahrzeugs, abhängig von der.kinetischen Energie des Fahrzeugs, entweder zur Umkehrung der Fahrtrichtung des Fahrzeugs oder zur Reduzierung der Motordrehzahl, und im Extremfall sogar zur Drehrichtungsumkehr des Motors.

Herkömmlicherweise muss für eine ordnungsgemäße Arbeitsweise eines Kraftfahrzeugantriebsstranges sichergestellt sein, dass sich das Kraftfahrzeug in der durch den jeweils im Schaltgetriebe eingelegten Gang bestimmten Fahrtrichtung bewegt, wenn Fehlreaktionen der das Einkuppeln steuernden Steuerschaltung vermieden werden sollen. Das Kraftfahrzeug darf sich mit anderen Worten nur vorwärts bewegen, wenn einer der Vorwärtsfahrgänge eingelegt ist, und nur rückwärts bewegen, wenn der Rückwärtsgang eingelegt ist. Bewegt sich das Kraftfahrzeug beispielsweise durch Anrollen an einer Fahrbahnneigung mit eingelegtem Rückwärtsgang in Vorwärtsrichtung, so kann dies je nach Typ der Steuerungsanordnung entweder dazu führen, dass in diesem Betriebszustand trotz eines Anfahrwunsches des Fahrers nicht eingekuppelt werden kann, oder aber dass ohne Anfahrwunsch vollständig eingekuppelt und der Motor damit abgewürgt wird.

Aus der DE 199 32 052 A1 ist ein Verfahren zum Erkennen der Drehrichtung einer Abtriebswelle eines automatisierten Getriebes bei einem Anrollen eines Fahrzeugs bekannt. Hierbei wird ein zeitabhängiges Verhalten eines ermittelten Parameters mit Kenngrößen zur Erkennung des Fahrzustandes verglichen. Dabei wird eine Synchronpunktberechnung in Abhängigkeit vom erkannten Fahrzustand durchgeführt.

Ein Nachteil dieses Verfahrens besteht darin, dass die Kenngrößen in Abhängigkeit vom Fahrzeugtyp schwanken können. Zudem können die Kenngrößen vom jeweiligen Zustand des Fahrzeugs (z.B. der jeweiligen Beladung) abhängen. Somit müssen die Kenngrößen in Abhängigkeit vom Fahrzeugtyp und schlimmstenfalls in Abhängigkeit vom Beladungszustand des Fahrzeugs gewählt werden. Dies erfordert einen vergleichsweise hohen Speicherbedarf. Es ist ferner nachteilig, dass die Synchronpunktberechnung zeitintensiv ist, was zu verzögerten Schaltbetrieben führen kann. Ferner ist zur Durchführung des Verfahrens ein hoher konstruktiver Aufwand notwendig, wodurch relativ hohe Kosten verursacht werden.

Der Erfindung liegt daher die Aufgabe zugrunde, ein Verfahren vorzustellen, mit dem auf einfache Weise die Drehrichtungen der eingangs- und ausgangsseitigen Bauteile einer Anfahrkupplung zueinander erkannt werden, sowie Fehlreaktionen bei der automatischen Betätigung dieser Anfahrkupplung insbesondere dann verhindert werden können, wenn der eingelegte Getriebegang eines Schaltgetriebes nicht zu der Bewegungsrichtung des Fahrzeuges passt. Dabei soll insbesondere auf die Nutzung eines gesonderten drehrichtungerkennenden Sensors verzichtet werden.

Die Lösung dieser Aufgabe ergibt sich aus den Merkmalen des unabhängigen Patentanspruchs 1, während vorteilhafte Ausgestaltungen und Weiterbildungen der Erfindung den Unteransprüchen entnehmbar sind.

Die der Erfindung zugrunde liegende Aufgabe wird für einen Antriebsstrang mit einer Fliehkraftkupplung mit einem Verfahren gemäß den Merkmalen des Anspruchs 1 gelöst, welches die Besonderheiten dieses Kuppfungstyps und deren selbstständige Betätigungsfunktionen berücksichtigt.

Demnach dient dieses Verfahren zum Erkennen der Drehrichtung einer mit einer Getriebeeingangswelle verbundenen Sekundärseite einer Anfahrkupplung mit mechanischer Fliehkraftkupplung eines Kraftfahrzeugs im Vergleich zu der mit einer Antriebswelle eines Antriebsmotors verbundenen Primärseite der Anfahrkupplung und ist durch folgende Verfahrensschritte gekennzeichnet:
- Erfassen der Primärdrehzahl der Primärseite und der Sekundärdrehzahl der Sekundärseite der Anfahrkupplung;
- sofern die Sekundärdrehzahl größer ist als die Primärdrehzahl, Anheben der Drehzahl des Antriebsmotors einmalig für einen vorbestimmten Zeitraum Δt auf einen von der Beschleunigung der Sekundärdrehzahl abhängigen Soll-Drehzahlwert, wodurch kurzzeitig ein bestimmtes Kupplungsmoment eingestellt wird;
- Erkennen von gleichen Drehrichtungen der Primärseite und der Sekundärseite der Anfahrkupplung, wenn die Primärdrehzahl und die Sekundärdrehzahl sich innerhalb eines vorgegebenen Zeitraumes angleichen und
- Erkennen von unterschiedlichen Drehrichtungen der Primärseite und der Sekundärseite der Anfahrkupplung, wenn die Drehzahl der Primärseite der Anfahrkupplung beziehungsweise der Brennkraftmaschine oder das Kupplungsmoment abfällt.

Demnach führt im Fall des Vorliegens gleicher Drehrichtungen an der Anfahrkupplung der Schritt des Anhebens der Primärdrehzahl der Brennkraftmaschine durch die Motorsteuerung einmalig innerhalb eines Zeitraumes Δt auf einen von der Beschleunigung der Sekundärdrehzahl abhängigen Wert zu einem Gleichlauf,der eingangsseitigen und ausgangsseitigen Bauteile der Fliehkraftkupplung, also auch zwischen der Antriebswelle des Antriebsmotors und der Getriebeeingangswelle.

Im Fall des Vorliegens ungleicher Drehrichtungen an der Anfahrkupplung kann eine Reduzierung der Motordrehzahl unter die Leerlaufdrehzahl aufgrund einer speziellen konstruktiven Charakteristik der Fliehkraftkupplung nicht stattfinden. Diese öffnet sich vielmehr einstellungsbedingt schon vor Erreichen dieser Drehzahl.

Mittels diesem Verfahren kann für einen Antriebsstrang mit einer Fliehkraftkupplung ohne Einsatz eines gesonderten drehrichtungserkennenden Sensors aus der Wirkung des Einkuppelns auf Drehrichtungsunterschiede der antriebs- und abtriebsseitigen bzw. primär- und sekundärseitigen Bauteile der Anfahrkupplung geschlossen sowie anschließend darauf reagiert werden.

Bei dem Verfahren kann in bevorzugter Ausgestaltung vorgesehen sein, dass nach dem Erkennen von unterschiedlichen Drehrichtungen zumindest in einem Steuergerät ein Zustandsmerker über das Vorliegen entgegengesetzter Drehrichtungen von Primärseite und Sekundärseite der Anfahrkupplung abgespeichert wird. Dieser Zustandsmerker ist für weitere Steuerungsfunktionen vorteilhaft nutzbar.

Zudem wird es als sinnvoll beurteilt, wenn nach dem Abspeichern des Zustandsmerkers die Drehzahl des Antriebsmotors auf die Leerlaufdrehzahl eingestellt wird, wodurch die Fliehkraftkupplung geöffnet und die Antriebsverbindung zwischen dem Antriebsmotor und dem Schaltgetriebe unterbrochen wird.

Um noch mehr Sicherheit beim Betrieb eines solchen Kraftfahrzeuges erzeugen zu können, wird gemäß einer weiteren Verfahrensvariante vorgeschlagen, dass dann, wenn bei abgespeichertem Zustandsmerker über das Vorliegen entgegengesetzter Drehrichtungen die Sekundärdrehzahl ein vorbestimmtes Drehzahlniveau überschreitet, das Schaltgetriebe in seine Neutral-Stellung geschaltet wird.

Das für beide Verfahrensalternativen genannte vorbestimmte Drehzahlniveau entspricht vorzugsweise demjenigen Differenzdrehzahlwert, ab dem mit einer Zerstörung der Anfahrkupplung, insbesondere einer Kupplungsscheibe der Anfahrkupplung, und/oder einem unkomfortablen Einkuppeln gerechnet werden muss.

In weiterer Ausgestaltung wird vorgeschlagen, dass der Zustandsmerker über das Vorliegen entgegengesetzter Drehrichtungen gelöscht wird, wenn die Sekundärdrehzahl den Wert Null (Fahrzeugstillstand) aufweist. Durch diese Maßnahme wird erreicht, dass der Zustandsmerker steuerungstechnisch nur dann Einfluss auf den Antriebstrang ausüben können, wenn das Fahrzeug aus dem Stillstand in Bewegung gerät.

Schließlich wird es zum sicheren Betrieb des Fahrzeuges als sinnvoll erachtet, wenn nach einer zwangsweisen Schaltung des Schaltgetriebes in dessen Neutral-Stellung zum erneuten Einlegen eines Getriebegangs zuerst die Neutral-Stellung des Getriebes durch eine "Neutral"-Fahrschalterstellung bestätigt werden muss. Auf diese Weise wird sichergestellt, dass der Fahrer des Fahrzeuges die automatisch eingestellte Neutralstellung des Getriebes erkannt und sich darauf eingestellt hat. Ausgehend von dieser Informationslage kann er dann den Fahrschalter bzw. den Getriebewählhebel in die seinen aktuellen Vorstellungen entsprechende Gang- oder Fahrstufenposition bewegen.

Der Beschreibung ist eine Zeichnung beigefügt, die schematisch den Aufbau eines Kraftfahrzeugantriebsstranges mit einer Vorrichtung zum Durchführen eines Verfahrens zum Erkennen und Interpretieren einer reversierenden Drehrichtung an einer automatisiert steuerbaren, federbelasteten und von einem Aktuator betätigbaren Anfahrkupplung zeig, wie auch aus dem Dokument DE-A-4 229 024 als Stand der Technik bekannt ist.

Zu dem Antriebsstrang des Kraftfahrzeuges 10 gehört demnach ein als Brennkraftmaschine 14 ausgebildeter Antriebsmotor und ein Schaltgetriebe 18, die über die erwähnte Anfahrkupplung 16 antriebstechnisch miteinander verbindbar sind. Die Anfahrkupplung 16 enthält ein primärseitiges Kupplungselement, welches mit der Kurbelwelle 19 der Brennkraftmaschine 14 verbunden ist, sowie ein sekundärseitiges Kupplungselement, welches mit der Getriebeeingangswelle 21 des Schaltgetriebes 18 antriebswirksam in Verbindung steht. Das Ausgangsdrehmoment des Schaltgetriebes 18 ist über eine Getriebeausgangswelle 26 an ein Differentialgetriebe 28 übertragbar, welches dieses Drehmoment jeweils über Achsantriebswellen 30, 30' an Fahrzeugräder 32, 32' des Kraftfahrzeugs 10 weiterleitet.

Wie dieser Darstellung leicht entnehmbar ist, dreht sich die Primärseite der Anfahrkupplung 16 bei geöffneter Anfahrkupplung mit der Drehzahl der Kurbelwelle 19. Sofern die Anfahrkupplung 16 geschlossen ist und sich das Fahrzeug in der durch den eingelegten Getriebegang vorgegebenen Bewegungsrichtung (vorwärts oder rückwärts) bewegt, weist auch die Sekundärseite der Kupplung 16 und die Getriebeeingangswelle 21 die gleiche Drehrichtung und Drehzahl auf wie die Kurbelwelle 19.

Demnach kann bei geöffneter Anfahrkupplung 16 die Getriebeeingangswelle 21 bei stillstehendem Fahrzeug stillstehen, während die Drehzahl der Kurbelwelle 19 beispielsweise etwas über der Leerlaufdrehzahl der Brennkraftmaschine 14 liegt und in einer Drehrichtung dreht, die durch die Auslegung der Brennkraftmaschine 14 vorgegeben ist.

Es ist aber auch möglich, dass die Getriebeeingangswelle 21 bei sich bewegendem Fahrzeug über die Fahrzeugräder 32 und 32', die Achsantriebswellen 30 und 30', das Differentialgetriebe 28, die Getriebeabtriebswelle 26 und das Schaltgetriebe 18 bei offener Anfahrkupplung 16 angetrieben wird. In Abhängigkeit von der Bewegungsrichtung des Fahrzeugs und dem eingelegten Getriebegang kann die Getriebeeingangswelle 21 dabei in die eine Richtung oder in die dazu entgegengesetzte Richtung drehen und dabei eine zur Kurbelwelle 19 unterschiedliche Drehzahl und Drehrichtung aufweisen. Dies wurde eingangs bereits erläutert.

Zur Erfassung der Drehzahlen von Kurbelwelle 19 und Getriebeeingangwelle 21 sind zwei Drehzahlsensoren 20 und 20' am Antriebsstrang angeordnet, welche in bezug auf die Anfahrkupplung 16 eine Primärdrehzahl Uₚᵣᵢₘ am Ausgang der Brennkraftmaschine 14 und eine Sekundärdrehzahl U_{Sek} am Eingang des Schaltgetriebes 16 erfassen. Diese Drehzahlsensoren 20, 20' sind über nicht näher bezeichnete Sensorleitungen mit einem Steuergerät 22 verbunden.

Zur Durchführung des Verfahrens wird zur Ermittlung der Drehrichtung der Sekundärseite der Anfahrkupplung 16 der Aktuator 24 an der Anfahrkupplung 16 von dem Steuergerät 22 dann zur Schließbetätigung desselben ansteuert, wenn die Sekundärdrehzahl U_{Sek} des Schaltgetriebeeingangs bzw. der Sekundärseite der Anfahrkupplung 16 größer als die Primärdrehzahl U_{Prim} der Brennkraftmaschine 14 ist.

Dabei wird die Anfahrkupplung 16 bis auf einen von der Beschleunigung der Sekundärdrehzahl U_{Sek} abhängigen Schließgrad geschlossen und einer Motorsteuereinrichtung 12 bei Voreilen der Sekundärdrehzahl U_{Sek} gegenüber der Primärdrehzahl U_{Prim} ein Drehzahlsollwert zugeführt, welcher mit der Sekundärdrehzahl U_{Sek} im Zusammenhang steht, vorzugsweise dieser entspricht. Durch Ansprechen auf diesen Drehzahlsollwert regelt die Motorsteuereinrichtung 12 dann die Primärdrehzahl U_{Prim} der Brennkraftmaschine 14.

Innerhalb des Steuergeräts 22 ist eine (nicht gezeigte) Erfassungsvorrichtung zum Erfassen einer Reduzierung der Primärdrehzahl U_{Prim} der Brennkraftmaschine 14 unterhalb von einer Leerlaufdrehzahl derselben bereitgestellt. Diese Erfassungsvorrichtung erkennt bei einer Reduzierung der Primärdrehzahl U_{Prim} unter den Leerlaufdrehzahlwert, dass die Primärseite der Anfahrkupplung 16 im Vergleich zu deren Sekundärseite eine entgegengerichtete Drehrichtung aufweist.

Sofern die Drehzahlunterschiede bei entgegengesetzten Drehrichtungen zu groß sind, und die Primärdrehzahl U_{Prim} unter einen diesbezüglichen Drehzahlschwellwert abfällt, wird vorzugsweise durch das Steuergerät 22 ein Steuerungsbefehl zum Öffnen der Anfahrkupplung 16 an den Aktuator 24 geschickt. Dadurch kann sicher ein zu hartes Einkuppeln sowie mechanischer Schaden an der Anfahrkupplung 16 vermieden werden.

Sofern die Differenzdrehzahl zwischen der Primärseite und der Sekundärseite der Anfahrkupplung zu groß ist, wird zudem durch das Steuergerät 22 ein Steuerungsbefehl an das Schaltgetriebe 18 geschickt, durch den ein hier nicht dargestellter weiterer Aktuator im oder am Schaltgetriebe 18 dasselbe in seine Neutralposition schaltet.

### Bezugszeichen

- 10: Kraftfahrzeug
- 12: Motorsteuereinrichtung
- 14: Brennkraftmaschine
- 16: Anfahrkupplung
- 18: Schaltgetriebe
- 19: Kurbelwelle
- 20, 20': Drehzahlsensor
- 21: Getriebeeingangswelle
- 22: Steuergerät
- 24: Aktuator
- 26: Getriebeausgangswelle
- 28: Differentialgetriebe
- 30, 30': Achsantriebswelle
- 32, 32': Fahrzeugrad

- M_{Kuppel}: Kupplungsmoment
- U_{Leer}: Leerlaufdrehzahl
- U_{Prim}: Primärdrehzahl, Antriebsmaschinendrehzahl
- U_{Sek}: Sekundärdrehzahl, Getriebeeingangswellendrehzahl
- U_{Soll}: Soll-Drehzahl für den Antriebsmotor
- Δt: Zeitraum

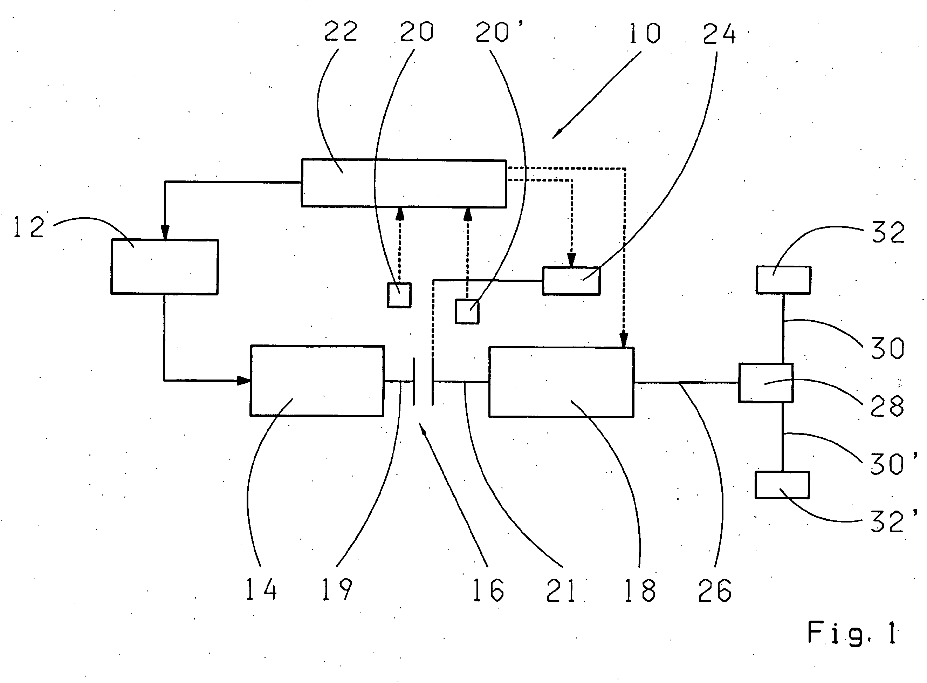

## Patentansprüche

1. Verfahren zum Erkennen der Drehrichtung einer mit einer Getriebeeingangswelle (21) verbundenen Sekundärseite einer Anfahrkupplung (16) mit mechanischer Fliehkraftkupplung eines Kraftfahrzeugs, im Vergleich zu der mit einer Antriebswelle (19) eines Antriebsmotors (14) verbundenen Primärseite der Anfahrkupplung (16), **gekennzeichnet durch** folgende Verfahrensschritte:
- Erfassen der Primärdrehzahl (U_{Prim}) der Primärseite und der Sekundärdrehzahl (U_{Sek}) der Sekundärseite der Anfahrkupplung (16);
- sofern die Sekundärdrehzahl (U_{Sek}) größer ist als die Primärdrehzahl (U_{Prim}). Anheben der Drehzahl des Antriebsmotors einmalig für einen vorbestimmten Zeitraum (At) auf einen von der Beschleunigung der Sekundärdrehzahl (U_{Sek}) abhängigen Soll-Drehzahlwert, wodurch kurzzeitig ein bestimmtes Kupplungsmoment (M_{Kuppel}) eingestellt wird;
- Erkennen von gleichen Drehrichtungen der Primärseite und der Sekundärseite der Anfahrkupplung (16), wenn die Primärdrehzahl (U_{Prim}) und die Sekundärdrehzahl (U_{Sek}) sich innerhalb eines vorgegebenen Zeitraumes angleichen und
- Erkennen von unterschiedlichen Drehrichtungen der Primärseite und der Sekundärseite der Anfahrkupplung (16), wenn die Drehzahl der Primärseite der Anfahrkupplung (16) beziehungsweise der Brennkraftmaschine (U_{Prim}) oder das Kupplungsmoment (M_{Kuppel}) abfällt.

2. Verfahren nach Anspruch 1, **dadurch gekennzeichnet, dass** nach dem Erkennen von unterschiedlichen Drehrichtungen zumindest in einem Steuergerät (22) ein Zustandsmerker über das Vorliegen entgegengesetzter Drehrichtungen von Primärseite und Sekundärseite der Anfahrkupplung (16) abgespeichert wird.

3. Verfahren nach Anspruch 2, **dadurch gekennzeichnet, dass** nach dem Abspeichern des Zustandsmerkers die Drehzahl des Antriebsmotors (14) auf die Leerlaufdrehzahl (U_{Leer}) eingestellt wird, wodurch die Anfahrkupplung (16) geöffnet wird.

4. Verfahren nach Anspruch 2 oder 3, **dadurch gekennzeichnet, dass** dann, wenn bei abgespeichertem Zustandsmerker über das Vorliegen entgegengesetzter Drehrichtungen die Sekundärdrehzahl (U_{Sek}) ein vorbestimmtes Drehzahlniveau (U_{Niv}) überschreitet, das Schaltgetriebe (18) in seine Neutral-Stellung geschaltet wird.

5. Verfahren nach Anspruch 4, **dadurch gekennzeichnet, dass** das vorbestimmte Drehzahlniveau (U_{Niv}) dem Differenzdrehzahlwert entspricht, ab dem mit einer Zerstörung der Anfahrkupplung (16), insbesondere einer Kupplungsscheibe der Anfahrkupplung (16), und/oder einem unkomfortablen Einkuppeln gerechnet werden muss.

6. Verfahren nach einem der vorherigen Ansprüche, **dadurch gekennzeichnet, dass** der Zustandsmerker über das Vorliegen entgegengesetzter Drehrichtungen gelöscht wird, wenn die Sekundärdrehzahl (U_{Sek}) den Wert Null (Fahrzeugstillstand) aufweist.

7. Verfahren nach Anspruch 4, **dadurch gekennzeichnet, dass** nach einer zwangsweisen Schaltung des Schaltgetriebes (18) in dessen Neutral-Stellung zum erneuten Einlegen eines Getriebegangs zuerst die Neutral-Stellung des Getriebes (18) durch eine "Neutral"-Fahrschalter-stellung bestätigt werden muss.

## Claims

1. The invention relates to a method for the recognition of the rotating sense of the secondary side of an automotive starting clutch (16) with automotive centrifugal clutch connected to a transmission input shaft (21), compared to that of the primary side of the starting clutch (16) connected to a drive shaft (19) of a drive motor (14), **characterized by** the following process steps:
- Sensing of the primary RPM (RPMprim) of the primary side and of the secondary RPM (RMPsec) of the secondary side of the starting clutch (16).
- If the secondary RPM (RPMsec) exceeds the primary RPM (RPMprim), elevation of the speed of the drive motor for a specified period (At) to a nominal speed value dependent on the acceleration of the secondary RPM (RPMsec), which briefly results in a specific clutch torque (M_{clutch}) being set.
- Sensing of concurrence of the rotating senses of the primary and the secondary sides of the starting clutch (16) following convergence of primary RPM (RPMprim) and secondary RPM (RPMsec) within a specified period.
- Sensing of divergence of the rotating senses of the primary and the secondary sides of the starting clutch (16) following a drop of the speed of the primary side of the starting clutch (16), or of the combustion engine (RPMprim), or of the clutch torque(M_{clutch}).

2. Method according to claim 1, **characterized in that** following recognition of divergence of the rotating senses, a state marker is stored in at least one control unit (22) for the presence of opposed rotating senses of the primary side and the secondary side of the starting clutch (16).

3. Method according to claim 2, **characterized in that** following storage of the state marker, the speed of the drive motor (14) is set to idling speed (RPMidle), which results in opening of the starting clutch (16).

4. Method according to claim 2 or 3, **characterized in that** if the secondary speed (RPMsec) exceeds a preset speed level (RPMIev), with a state marker for the presence of divergent senses of rotation being stored, the manual transmission (18) will be set to Neutral.

5. Method according to claim 4, **characterized in that** the preset speed level (R P Mlev) is equivalent to the differential speed level at which destruction of the starting dutch (16), especially of a clutch disk of the starting clutch (16), and /or uncomfortable clutch engagement must be expected.

6. Method according to one of the preceding claims, **characterized in that** the state marker for the presence of opposed senses of rotation is erased when the secondary speed (RPMsec) value is at zero (vehide standstill).

7. Method according to claim 4, **characterized in that** following a forced shift of the manual transmission (18) to Neutral for renewed engagement of a gear, the neutral position of the transmission (18) will first have to be acknowledged by Neutral selector lever position.

## Revendications

1. Procédé de reconnaissance du sens de rotation d'un côté secondaire d'un embrayage de démarrage (16) avec un embrayage centrifuge mécanique d'un véhicule automobile lié à un arbre d'entrée d'une boîte de vitesses (21), par rapport au côté primaire de l'embrayage de démarrage (16) lié à un arbre d'entrée (19) d'un moteur d'entraînement (14), **caractérisé par** les étapes suivantes :
- Acquisition du régime primaire (Uₚᵣᵢₘ) du côté primaire et du régime secondaire (U_{Sek}) du côté secondaire de l'embrayage de démarrage (16) ;
- Si le régime secondaire (U_{Sek}) est plus élevé que le régime primaire (U_{Prim}), augmentation unique du régime du moteur d'entraînement pendant une période prédéterminée (Δt) à un régime de consigne dépendant de l'accélération du régime secondaire (U_{Sek}), permettant de régler momentanément un couple d'embrayage déterminé (M_{Kuppel});
- Reconnaissance de sens de rotation identiques du côté primaire et du côté secondaire de l'embrayage de démarrage (16), lorsque le régime primaire (U_{Prim}) et le régime secondaire (U_{Sek}) se rapprochent dans une période préfigée et
- Reconnaissance de sens de rotation différents du côté primaire et du côté secondaire de l'embrayage de démarrage (16), lorsque le régime du côté primaire de l'embrayage de démarrage (16) ou de la machine à combustion interne (U_{Prim}) ou le couple d'embrayage (M_{Kuppel}) diminuent

2. Procédé selon la revendication 1, **caractérisé en ce que** après la reconnaissance de différents sens de rotation au moins dans un boîtier de commande électronique (22) est enregistré un flag d'état sur la présence de sens de rotation opposés du côté primaire et du côté secondaire de l'embrayage de démarrage (16).

3. Procédé selon la revendication 2, **caractérisé en ce que** après l'enregistrement du flag d'état le régime du moteur d'entraînement (14) est réglé sur le régime de ralenti (U_{Leer}), permettant d'ouvrir l'embrayage de démarrage (16).

4. Procédé selon la revendication 2 ou 3, **caractérisé en ce que** au moment où, le flag d'état enregistré signalant la présence de sens de rotation opposés, le régime secondaire (U_{Sek}) dépasse un niveau de régime prédéterminé (U_{Niv}), dans la boîte de vitesses mécanique (18) est engagé le point mort.

5. Procédé selon la revendication 4, **caractérisé en ce que** le niveau de régime prédéterminé (U_{Niv}) correspond au régime différentiel, à partir duquel il faudra s'attendre à la destruction de l'embrayage de démarrage (16), en particulier d'un disque d'embrayage de l'embrayage de démarrage (16), et/ou à une détérioration du confort d'embrayage.

6. Procédé selon une des revendications précédentes, **caractérisé en ce que** le flag d'état signalant la présence de sens de rotation opposés est effacé, dès que le régime secondaire (U_{Sek}) ateint la valeur zéro (arrêt du véhicule).

7. Procédé selon la revendication 4, **caractérisé en ce que** après un passage forcé au point mort de la boîte de vitesses mécanique (18), afin de pouvoir engager à nouveau un rapport de la boîte de vitesses il faudra d'abord confirmer la position de point mort de la boîte de vitesses (18) par rengagement de la position de "point mort" au moyen du sélecteur de marche.
